**Europäisches Patentamt**

**European Patent Office**

**Office européen des brevets**

(11) Veröffentlichungsnummer: **0 415 147 A2**

# EUROPÄISCHE PATENTANMELDUNG

(21) Anmeldenummer: 90115316.3

(22) Anmeldetag: 09.08.90

(51) Int. Cl.⁵: **B60H 1/00**, G05D 23/19

(30) Priorität: 29.08.89 DE 3928495

(43) Veröffentlichungstag der Anmeldung:
**06.03.91 Patentblatt 91/10**

(84) Benannte Vertragsstaaten:
**DE ES FR GB IT SE**

(71) Anmelder: **MAX KAMMERER GMBH**
**Hohemarkstrasse 22**
**W-6370 Oberursel/Taunus(DE)**

(72) Erfinder: **Frost, Dietmar**
**Am Hölzerbach 11**
**W-6251 Selters(DE)**
Erfinder: **Dessau, Jürgen**
**Eisenbachweg 10**
**W-6392 Neu-Anspach(DE)**

(74) Vertreter: **Eyer, Eckhardt Philipp, Dipl.-Ing. et al**
**Patentanwälte Eyer & Linser**
**Robert-Bosch-Strasse 12a**
**W-6072 Dreieich(DE)**

(54) **Sollwerteinsteller für Klimaanlagen von Kraftfahrzeugen.**

㊅ Sollwerteinsteller für Klimaanlagen von Kraftfahrzeugen, bestehend aus einem Wählrad (1, 2, 3) sowie einem von einem Pontentiometerträger (9) und einem mit dem Potentiometerträger drehbar verbundenen Potentiometerdeckel (6) gebildeten Potentiometer, dessen Potentiometerträger unverdrehbar in einem Träger (10) montiert ist, bei dem das Wählrad (1, 2, 3) eine dem Umfang und der Höhe des Potentiometers (6, 9) entsprechende Aufnahme aufweist und einerseits der Potentiometerdeckel (6) und das Wählrad (1, 2, 3) sowie andererseits der Potentiometerdeckel (9) und der gestellfeste Träger (10) mit jeweils einander entsprechenden Verdrehsicherungen (8, 14) versehen sind. Die Verdrehsicherung des Potentiometerträgers (9) ist von seinem zu diesem Zweck unrund ausgebildeten Lagerzapfen ,- (14) in Verbindung mit einer entsprechend ausgebildeten Aufnahme des Trägers (10) gebildet. Das Wählrad ist aus zwei Halbschalen (1, 2) sowie einem zwischen den Halbschalen (1, 2) eingeschlossenen transparenten Skalenring (3, 4) gebildet, von denen die eine Halbschale mit der das Einstecken des Potentiometers (6, 9) von außen ermöglichenden Aufnahme und die andere mit einem in eine Lagerstelle (11) einsteckbaren Lagerzapfen (12) versehen ist. Die Lagerzapf en (12, 14) sind zur Einführung eines Lichtleiters (13) in das Innere des Wählrades (1, 2) bezw. des Skalenringes (3, 4) hohl ausgebildet.

EP 0 415 147 A2

Die Erfindung geht aus von einem Sollwerteinsteller für Klimaanlagen von Kraftfahrzeugen gemäß dem Oberbegriff des Patentanspruches 1.

Bei den bekannten Sollwerteinstellern dieser Art erfolgt die Koppelung zwischen dem Einstellelement und dem Potentiometer mittels einer starren oder flexiblen Welle oder eines Getriebesatzes, die relativ viel - im Kraftfahrzeug in der Regel nur beschränkt zur Verfügung stehenden - Raum einnehmen.

Der vorliegenden Erfindung liegt demgemäß als Aufgabe die Schaffung eines kompakten, d.h. nur wenig Raum in Anspruch nehmenden Sollwerteinstellers der beschriebenen Art zugrunde.

Diese Aufgabe wird von einem Sollwerteinsteller mit den im Patentanspruch 1 wiedergegebenen Merkmalen gelöst.

Weitere Ausführungsformen und Vorteile ergeben sich aus der nachfolgenden Beschreibung, in der die Erfindung anhand der beiliegenden Zeichnung beispielsweise erläutert ist. Es zeigen

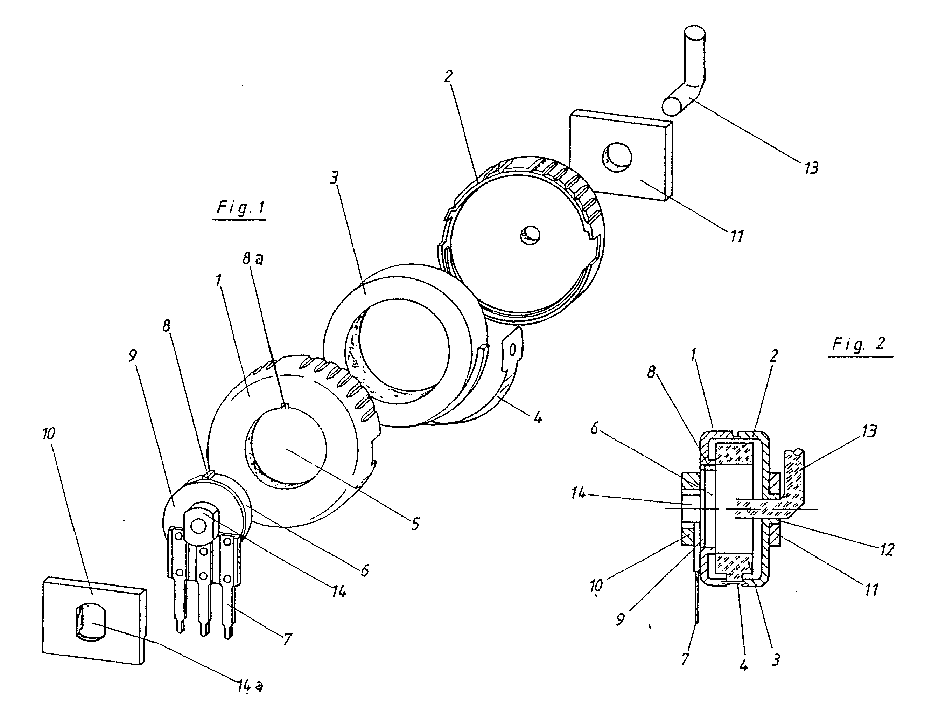

Fig. 1 einen Sollwerteinsteller gemäß Erfindung in Sprengdarstellung

Fig. 2 einen Schnitt durch den in Fig. 1 wiedergegebenen Sollwerteinsteller nach der Montage

Der in der Zeichnung wiedergegebene Sollwerteinsteller für Klimaanlagen von Kraftfahrzeugen besteht aus einem Wählrad 1, 2, 3, 4 sowie einem Potentiometer, das von einem Pontentiometerträger 9 und einem mit dem Potentiometerträger drehbar verbundenen Potentiometerdeckel 6 gebildet ist und dessen Potentiometerträger 9 unverdrehbar in einem Träger 10 montiert ist. Das Wählrad ist gebildet aus zwei Halbschalen 1, 2 sowie einem zwischen den Halbschalen 1, 2 eingeschlossenen transparenten Skalenring 3 mit daran angeordneter ebenfalls transparenter Sollwertskala 4. Das Wählrad 1, 2, 3, 4 weist eine dem Umfang und der Höhe des Potentiometers 8, 9 entsprechende Aufnahme 5 auf, wobei einerseits der Potentiometerdeckel 6 und das Wählrad 1, 2, 3 sowie andererseits der Potentiometerdeckel 9 und der gestellfeste Träger 10 mit jeweils einander entsprechenden Verdrehsicherungen 8, 8a bzw. 14, 14a versehen sind. Im dargestellten Beispiel ist die Anordnung so getroffen, daß die eine Halbschale 1 mit der - das Einstecken des Potentiometers 6, 9 von außen ermöglichenden - Aufnahme 5 und die andere mit einem in eine Lagerstelle 11 einsteckbaren Lagerzapfen 12 versehen ist. Die Verdrehsicherung des Potentiometerträgers 9 ist von seinem zu diesem Zweck unrund ausgebildeten Lagerzapfen 14 in Verbindung mit einer entsprechend ausgebildeten Aufnahme 14a des Trägers 10 gebildet.

Im Beispielsfalle sind der Lagerzapfen 14 des Potentiometerträgers 9 und der Lagerzapfen 12 der Wählradhalbschale 2 hohl ausgebildet, wodurch die Möglichkeit zur Einführung eines Lichtleiters 13 in das Innere des Wählrades 1, 2 als Beleuchtung für den Skalenring 3, 4 je nach Einbaubedingungen von der einen oder der anderen Seite besteht. Es kann schließlich der gesamte Sollwerteinsteller mit allen seinen Teilen zur Bildung einer kompakten Baugruppe in ein gemeinsames Gehäuse - nicht dargestellt -eingebaut sein, das zu diesem Zweck mit passgerechten Ausnehmungen zur Aufnahme der Träger 10, 11 versehen ist.

## Ansprüche

1. Sollwerteinsteller für Klimaanlagen von kraftfahrzeugen, bestehend aus einem Wählrad sowie einem von einem Pontentiometerträger und einem mit dem Potentiometerträger drehbar verbundenen Potentiometerdeckel gebildeten Potentiometer, dessen Potentiometerträger unverdrehbar in einem Träger montiert ist, dadurch gekennzeichnet, daß das Wählrad (1, 2, 3) eine dem Umfang und der Höhe des Potentiometers entsprechende Aufnahme (5) aufweist und einerseits der Potentiometerdeckel (6) und das Wählrad (1, 2, 3) sowie andererseits der Potentiometerdeckel (9) und der gestellfeste Träger (10) mit jeweils einander entsprechen-den Verdrehsicherungen (8, 8a bzw. 14, 14a) ver-sehen sind.

2. Sollwerteinsteller für Klimaanlagen von Kraftfahrzeugen nach Anspruch 1, dadurch gekennzeichnet, daß die Verdrehsicherung des Potentiometerträgers (9) von seinem zu diesem Zweck unrund ausgebildeten Lagerzapfen (14) in Verbindung mit einer entsprechend ausgebildeten Aufnahme (14a) des Trägers (10) gebildet ist.

3. Sollwerteinsteller für Klimaanlagen von Kraftfahrzeugen nach Anspruch 1 oder 2, dadurch gekennzeichnet, daß das Wählrad aus zwei Halb schalen (1, 2) sowie einem zwischen den Halbschalen (1, 2) eingeschlossenen transparenten Skalenring (3, 4) gebildet ist, von denen die eine Halbschale mit der das Einstecken des Potentiometers (6, 9) von außen ermöglichenden Aufnahme (5) und die andere mit einem in eine Lagerstelle (11) einsteckbaren Lagerzapfen (12) versehen ist.

4. Sollwerteinsteller für Klimaanlagen von Kraftfahrzeugen nach Anspruch 1 bis 3, dadurch gekennzeichnet, daß die Lagerzapfen (14) des Potentiometerträgers (9) und/oder der Lagerzapfen (12) der Wählradhalbschale (2) zur Einführung eines Lichtleiters (13) in das Innere des Wählrades (1, 2) bezw. des Skalenringes (3, 4) hohl ausgebildet ist.

5. Sollwerteinsteller für Klimaanlagen von Kraftfahrzeugen nach Anspruch 1 bis 4, dadurch gekennzeichnet, daß die Träger (10, 11) in den Wänden eines gemeinsamen Gehäuses gehalten sind, das gemeinsam mit allen Funktionsteilen (1 bis 14) eine kompakte Baugruppe bildet.

Fig. 1

Fig. 2